Europäisches Patentamt

**European Patent Office**

Office européen des brevets

(11) Publication number: **0 058 274**
**A1**

(12) **EUROPEAN PATENT APPLICATION**

(21) Application number: **81304991.3**

(22) Date of filing: **23.10.81**

(51) Int. Cl.³: **A 01 N 47/48**
**//(A01N47/48, 37/34)**

(30) Priority: **17.02.81 US 235196**

(43) Date of publication of application:
**25.08.82 Bulletin 82/34**

(84) Designated Contracting States:
**BE DE FR GB IT NL**

(71) Applicant: BETZ EUROPE, INC.
4636 Somerton Road
Trevose Pennsylvania 19047(US)

(72) Inventor: Whitekettle, Wilson Kurt
831 Wright Drive
Maple Glen Pennsylvania 19002(US)

(72) Inventor: Wisler, Joan
800 Trenton Road Apt. 433
Langhorne Pennsylvania 19047(US)

(74) Representative: McCall, John Douglas et al,
W.P. THOMPSON & CO. Coopers Building Church Street
Liverpool L1 3AB(GB)

(54) Algicidal composition and method of controlling the growth of algal microorganisms in aqueous systems.

(57) There is disclosed an algicidal composition and method for inhibiting and controlling the growth of algal microorganisms, especially the green algae, *Chlorella pyrenoidosa*. The composition comprises a mixture of methylenebis (thiocyanate) and 2,2-dibromo-3-nitrilopropionamide. The method comprises administering an effective amount of this combined treatment to the particular water containing system for which treatment is desired, the methylenebis (thiocyanate) and the 2,2-dibromo-3-nitrilopropionamide being added separately or together.

EP 0 058 274 A1

.1.

DESCRIPTION

"ALGICIDAL COMPOSITION AND METHOD OF CONTROLLING THE
GROWTH OF ALGAL MICROORGANISMS IN AQUEOUS SYSTEMS"

The present invention relates to algicidal compositions and to a method of controlling the growth of algal microorganisms in aqueous system.

The formation of aqueous slimes by microorganisms. is a problem which is encountered in many systems. For example, the problem is not only found in natural waters such as lagoons, lakes, ponds, etc. and confined waters as in pools, but also in such industrial systems as cooling water systems, air washer systems and pulp and paper mill systems. All possess conditions which are conductive to the growth and reproduction of slime-forming microorganisms. In both once-through and recirculating cooling systems, for example, which employ large quantities of water as a cooling medium, the formation of slime by microorganisms is an extensive and constant problem.

Airborne organisms are readily entrained in the water from cooling towers and find this warm medium an ideal environment for growth and multiplication. Aerobic and heliotropic organisms fluorish on the tower proper while other organisms colonize and grow in such areas as the tower sump and the piping and passages of the cooling system. The slime formation not only aids in the deterioration of the tower structure in the case of wooden towers, but also, by its deposition on metal surfaces, promotes corrosion. In addition, slime carried through the cooling system plugs and fouls lines, valves, strainers, etc. and deposits on heat exchange surfaces. In the latter case, the impedance of heat transfer can greatly reduce the efficiency of the cooling system.

2.

In pulp and paper mill systems, slime formed by microorganisms is commonly encountered causing fouling or plugging thereof. The slime also becomes entrained in the paper produced to cause breakouts on the paper machines, with consequent work stoppages and the loss of production time, and/or is responsible for unsightly blemishes in the final product, which result in rejects and wasted output. The previously discussed problems have resulted in the extensive utilization of biocides in cooling water and pulp and paper mill systems. Materials which have enjoyed widespread use in such applications include chlorine, chlorinated phenols, organo-bromines, and various organo-sulfur compounds. All of these compounds are generally useful for this purpose but each is attended by a variety of impediments. For example, chlorination is limited both by its specific toxicity for slime-forming organisms at economic levels and by the tendency of chlorine to react, which results in the expenditure of the chlorine before its full biocidal function is achieved. Other biocides are attended by odour problems and hazards in respect to storage, use or handling which limit their utility. To date, no one compound or type of compound has achieved a clearly established predominance in respect to the applications discussed. Likewise, lagoons, ponds, lakes, and even pools, either used for pleasure purposes or used for industrial purposes for the disposal and storage of industrial wastes, become, during the warm weather, beseiged by slime due to microorganism growth and reproduction. In the case of the recreational areas the problem of infection is obvious. In the case of industrial storage or disposal of industrial materials, the microorganisms cause additional problems which must be eliminated prior to the material's use or disposal of the waste.

3.

Naturally, economy is a major consideration in respect to all of these biocides. Such economic considerations attach to both the cost of the biocide and the expense of its application. The cost performance index of any biocide is derived from the basic cost of the material, its effectiveness per unit of weight, the duration of its biocidal or biostatic effect in the system treated, and the ease and frequency of its addition to the system treated. To date, none of the commercially available biocides have exhibited a prolonged biocidal effect. Instead, their effectiveness is rapidly reduced as the result of exposure to physical conditions such as temperature, association with ingredients contained by the system toward which they exhibit an affinity or substantivity, etc., with a resultant restriction or elimination of their biocidal effectiveness, or by dilution.

As a consequence, the use of such biocides involves their continuous or frequent addition to systems to be treated and their addition to a plurality of points or zones in the systems to be treated. Accordingly, the cost of the biocide and the labour cost of such means of applying it are considerable. In other instances, the difficulty of access to the zone in which slime formation is experienced precludes the effective use of a biocide. For example, if in a particular system there is no access to an area at which slime formation occurs the biocide can only be applied at a point which is upstream in the flow system. However, the physical or chemical conditions, e.g., chemical reactivity, thermal degradation, etc., which exist between the point at which the biocide may be added to the system and the point at which its biocidal effect is desired render the effective use of a biocide impossible.

4.

Similarly, in a system experiencing relatively slow flow, such as a paper mill, if a biocide is added at the beginning of the system, its biocidal effect may be completely dissipated before it has reached all of the points at which this effect is desired or required. As a consequence, the biocide must be added at a plurality of points, and even then a diminishing biocidal effect will be experienced between one point of addition to the system and the next point downstream at which the biocides may be added. In addition to the increased cost of utilizing and maintaining plural feed points, gross ineconomies in respect to the cost of the biocide are experienced. Specifically, at each point of addition, an excess of the biocide is added to the system in order to compensate for that portion of the biocide which will be expended in reacting with other constituents present in the system or experience physical changes which impair its biocidal activity.

One biocidal composition and method comprising a combination of 1,3-dichloroacetone oxime acetate and 2,2-dibromo-3-nitrilopropionamide is disclosed in U.S. Patent 3,930,015 (Swered et al). Other synergistic biocidal compositions, including 2,2-dibromo-3-nitrilopropionamide and sundry other compounds are disclosed in U.S. Patents 3,929,562 (Shema et al); 3,897,562 (Shema et al); 3,897,554 (Shema et al); 3,896,231 (Shema et al); 3,873,444 (Shema et al); 3,865,724 (Shema et al); and 3,864,253 (Shema et al). The use of methylenebis (thiocyanate) in biocidal compositions is similarly detailed in U.S. Patent 3,862,324 (Swered et at).

Surprisingly, the present inventors have found that a mixture of 2,2-dibromo-3-nitrilopropionamide [hereinafter DBNPA] and methylenebis (thiocyanate) [hereinafter MBT] is especially efficacious in controlling the growth of algal microbes, especially the <u>Chlorella pyrenoidosa</u> species.

2,2-dibromo-3-nitrilopropionamide is commercially available from Dow Chemical and is sold under the designation "Dow XD-7287L". Methylenebis (thiocyanate) is availabe from Stauffer Chemical Company under the designation "N-948".

In accordance with the present invention, the combined MBT/DBNPA treatment may be added (the MBT and the DBNPA being added separately or together) to the desired aqueous system, in need of biocidal treatment, in a growth inhibiting amount, preferably from about .001 to about 200 parts of the combined treatment to one million parts (by weight) of the aqueous medium. Preferably, about 5 to about 50 parts of the combined treatment per one million parts (by weight) of the aqueous medium is added.

The operable range of weight ratios of DBNPA:MBT, in accordance with the present composition and method, may vary from about 1:4 to 512:1, with a weight ratio (DBNPA:MBT) of about 1:1 to 128:1, being preferred.

The combined treatment is added, for example, to cooling water systems, paper and pulp mill systems, pools, ponds, lagoons, lakes, etc., to control the formation of algal microorganisms, which may be contained by, or which may become entrained in, the system to be treated. It has been found that the DBNPA/MBT compositions and methods of utilization of the treatment are efficacious in controlling the green algal microorganisms which may populate these systems. It is thought that the combined treatment composition and method of the present invention will also be efficacious in inhibiting and controlling all types of algae microbes.

Surprisingly, it has been found that when the DBNPA/MBT ingredients are mixed, the resulting mixtures

6.

possess a higher degree of algicidal activity than that of the individual ingredients comprising the mixture. Accordingly, it is possible to produce a highly efficacious algicide. Because of the enhanced activity of the mixture, the total quantity of the algicide treatment may be reduced. In addition, the high degree of algicidal effectiveness which is provided by each of the ingredients may be exploited without use of higher concentrations of each.

To demonstrate the synergism exhibited by the inventive combinations of compounds, the following experimental data were developed. It is to be remembered that the following examples are to be regarded solely as being illustrative, and not as restricting the scope of the invention.

Synergism was demonstrated by adding the chemicals MBT and DBNPA in varying ratios and over a range of concentrations to a liquid nutrient medium which was subsequently inoculated with a standard volume of a suspension of the green alga Chlorella pyrenoidosa. Growth was measured by determining the amount of radioactivity accumulated by the cells when $NaH^{14}CO_3$ was added as the sole source of carbon in the nutrient medium. The effect of the biocide chemicals alone and in combination, is to reduce the rate and amount of $^{14}C$ incorporation into the cells during incubation, as compared to controls not treated with the chemicals. Additions of the biocides, alone and in varying combinations, and concentrations were made according to the accepted "checkerboard" technique described by M. T. Kelley and J. M. Matsen, Antimicrobial Agents and Chemotherapy. 9,440, (1976). Following a four hour incubation, the amount of radioactivity incorporated in the cells was determined by counting ($^{14}C$ liquid

7.

scintillation procedures) all treated and untreated samples. The percent reduction of each treated sample was calculated from the relationship:

$$\frac{\text{Control } ^{14}\text{C(cpm)} - \text{treated } ^{14}\text{C(cpm)}}{\text{Control } ^{14}\text{C(cpm)}} \times 100 = \% \text{ reduction}$$

Plotting the % reduction of $^{14}$C level against the concentration of each biocide acting alone results in a typical sigmoidal dose-response curve, from which the biocide dose necessary to achieve any given % reduction can be interpolated.

Synergism was determined by the method of calculation described by F. C. Kull, P. C. Eisman, H. D. Sylwestrowicz and R. L. Mayer, Applied Microbiology 9, 538, (1961) using the relationship:

$$\frac{Q_A}{Q_a} + \frac{Q_B}{Q_b} = \text{synergism index (SI)}$$

where:

$Q_a$ = quantity of compound A, acting alone, producing an end point.

$Q_b$ = quantity of compound B, acting alone, producing an end point.

$Q_A$ = quantity of compound A in mixture, producing an end point.

$Q_B$ = quantity of compound B in mixture, producing an end point.

The end point used in the calculations is the % reduction caused by each mixture of A and B. QA and QB are the individual concentrations in the A/B mixture, causing a given % reduction. Qa and Qb are determined by interpolation from the respective dose-response curves of A and B as those concentrations of A and B acting alone which produce the same % reduction as each

specific mixture produced. If, for example, quantities of $Q_A$ plus $Q_B$ are sufficient to give a 50% reduction in $^{14}C$ content, $Q_a$ and $Q_b$ are those quantities of A or B acting alone found to give 50% reduction in $^{14}C$ content. A synergism index (SI) is calculated for each combination of A and B in the "checkerboard" whose endpoint ranges from 10 to 90% reuuction of $^{14}C$ content. Because of the nature of biological dose-responses, it is not valid to attempt to analyze endpoints of <10% or >90% reduction in this system. Where the SI is <1, synergism exists. Where the SI = 1, additivity exists. Where SI >1, antagonism exists.

The data in the following table come from treating Chlorella pyrenoidosa, a common nuisance alga in industrial cooling waters and in swimming pools, with varying ratios and concentrations of MBT and DBNPA. Shown for each combination is the % reduction of $^{14}C$ content, the calculated S.I., and the weight ratio of DBNPA to MBT. Synergism is shown over a broad range of concentrations and over a broad range of weight ratios (i.e., from 512:1 to 1:4). In this example, S.I. cannot be calculated for any weight ratios where the MBT concentration equals or exceeds 5 ug/ml, because that concentration of MBT alone gives >90% reduction. Similarly, a S.I. cannot be calculated for combinations in which the DBNPA concentration equals or exceeds 40 ug/ml.

MBT (ug/ml)

| DBNPA (ug/ml) | 0 | 0.039 | 0.078 | 0.156 | 0.313 | 0.625 | 1.25 | 2.5 | 5.0 | |
|---|---|---|---|---|---|---|---|---|---|---|
| 0 | 0 | 0 | 0 | 4 | 28 | 67 | 77 | 88 | 93 | % Reduction |
| | – | – | – | – | – | – | – | – | – | S.I. |
| | – | 0:100 | 0:100 | 0:100 | 0:100 | 0:100 | 0:100 | 0:100 | 0:100 | wt. ratio |
| 0.313 | 0 | 33 | 36 | 48 | 59 | 69 | 80 | 85 | 92 | % Reduction |
| | – | 0.14 | 0.25 | 0.35 | 0.59 | 0.81 | 0.84 | 1.25 | – | S.I. |
| | 100:0 | 8:1 | 4:1 | 2:1 | 1:1 | 1:2 | 1:4 | 1:8 | 1:16 | wt. ratio |
| 0.625 | 0 | 42 | 52 | 57 | 60 | 72 | 84 | 89 | 94 | % Reduction |
| | – | 0.16 | 0.21 | 0.35 | 0.60 | 0.82 | 0.65 | 0.76 | – | S.I. |
| | 100:0 | 16:1 | 8:1 | 4:1 | 2:1 | 1:1 | 1:2 | 1:4 | 1:8 | wt. ratio |
| 1.25 | 26 | 51 | 45 | 55 | 60 | 73 | 78 | 91 | 94 | % Reduction |
| | – | 0.16 | 0.28 | 0.38 | 0.70 | 0.68 | 0.87 | 0.77 | – | S.I. |
| | 100:0 | 32:1 | 16:1 | 8:1 | 4:1 | 2:1 | 1:1 | 1:2 | 1:4 | wt. ratio |
| 2.5 | 25 | 52 | 57 | 59 | 67 | 75 | 85 | 90 | 94 | % Reduction |
| | – | 0.25 | 0.30 | 0.41 | 0.63 | 0.72 | 0.71 | 0.81 | – | S.I. |
| | 100:0 | 64:1 | 32:1 | 16:1 | 8:1 | 4:1 | 2:1 | 1:1 | 1:2 | wt. ratio |
| 5 | 37 | 58 | 60 | 61 | 74 | 81 | 87 | 89 | 95 | % Reduction |
| | – | 0.33 | 0.40 | 0.54 | 0.50 | 0.59 | 0.78 | 0.88 | – | S.I. |
| | 100:0 | 128:1 | 64:1 | 32:1 | 16:1 | 8:1 | 4:1 | 2:1 | 1:1 | wt. ratio |
| 10 | 35 | 71 | 66 | 68 | 75 | 79 | 14 | 78 | 96 | % Reduction |
| | – | 0.47 | 0.58 | 0.63 | 0.68 | 0.75 | 10.23 | 2.0 | – | S.I. |
| | 100:0 | 256:1 | 128:1 | 64:1 | 32:1 | 16:1 | 8:1 | 4:1 | 2:1 | wt. ratio |
| 20 | 61 | 79 | 80 | 75 | 81 | 87 | 92 | 94 | 97 | % Reduction |
| | – | 0.70 | 0.71 | 1.0 | 0.87 | 0.92 | – | – | – | S.I. |
| | 100:0 | 512:1 | 256:1 | 128:1 | 64:1 | 32:1 | 16:1 | 8:1 | 4:1 | wt. ratio |
| 40 | 94 | 98 | 98 | 98 | 98 | 98 | 98 | 99 | 99 | % Reduction |
| | – | – | – | – | – | – | – | – | – | S.I. |
| | 100:0 | 1024:1 | 512:1 | 256:1 | 128:1 | 64:1 | 32:1 | 16:1 | 8:1 | wt. ratio |

9.

10.

The above table illustrates the fact that the combination of MBT and DBNPA, over all ratios inclusive of from 512 parts DBNPA to 1 part MBT and 1 part DBNPA to 4 parts MBT, is synergistic in its inhibitory effect against algae growth.

While we have shown and described herein certain embodiments of the present invention, it is intended that there be covered as well any change or modification therein which may be made without departing from the the spirit and scope of the invention.

0058274

## CLAIMS

1. Algicide composition characterised by comprising a mixture of methylenebis (thiocyanate) and 2,2-dibromo-3-nitrilopropionamide, wherein the weight ratio of said 2,2-dibromo-3-nitrilopropionamide to said methylenebis (thiocyanate) ranges from about 1:4 to 512:1.

2. A composition as claimed in claim 1 characterised in that said weight ratio is about 1:1 to about 128:1.

3. A method for controlling the growth of algal microorganisms in an aqueous system characterised by adding to said system, either separately or together, a growth inhibiting amount of methylenebis (thiocyanate) and 2,2-dibromo-3-nitrilopropionamide, wherein the weight ratio of said 2,2-dibromo-3-nitrilopropionamide to said methylenebis (thiocyanate) ranges from about 1:4 to about 512:1.

4. A method as claimed in claim 3, characterised in that said weight ratio is about 1:1 to about 128:1.

5. A method as claimed in claim 3 or 4 characterised in that said composition is added to said system in an amount of from about 0.1 to about 200 parts per weight of said composition per million parts by weight of said aqueous system.

6. A method as claimed in claim 5 wherein said composition is added to said system in an amount of from about 5 to about 50 parts per million of said aqueous system.

7. A method as claimed in any one of claims 3 to 6, characterised in that said aqueous system comprises a cooling water system.

8. A method as claimed in any one of claims 3 to 7, characterised in that said aqueous system comprises a pulp and paper mill system.

12.

9.    A method as claimed in any one of claims 3 to 8, characterised in that said algal microorganisms comprises a green algal microorganism.

10.    A method as claimed in claim 9, characterised in that said green algal microorganism comprises Chlorella pyrenoidosa.

0058274

European Patent
Office

EUROPEAN SEARCH REPORT

Application number

EP 81 30 4991

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | CHEMICAL ABSTRACTS, vol. 84, no. 15, 12th April 1976, page 177, no. 100855k, Columbus Ohio (USA); <br> & JP - A - 75 117 933 (KUMIAI CHEMICAL INDUSTRY CO. LTD.) (16-09-1975) *Abstract* <br><br> ----- | 1-10 | A 01 N 47/48 // <br> (A 01 N 47/48 <br> A 01 N 37/34 ) |

TECHNICAL FIELDS
SEARCHED (Int. Cl. ³)

A 01 N

The present search report has been drawn up for all claims

| Place of search | Date of completion of the search | Examiner |
|---|---|---|
| THE HAGUE | 27-05-1982 | DECORTE D. |